# EUROPÄISCHE PATENTSCHRIFT

(11) **EP 4 477 919 B1**
(45) Veröffentlichungstag und Bekanntmachung des Hinweises auf die Patenterteilung: **21.10.2026**
(21) Anmeldenummer: 23179337.3
(22) Anmeldetag: 14.06.2023
(51) Int. Cl.: F16H 25/18, F16H 53/02

(54) **MECHATRONISCHES ANTRIEBSMODUL**
MECHATRONIC DRIVE MODULE
MODULE D'ENTRAÎNEMENT MÉCATRONIQUE

(43) Veröffentlichungstag der Anmeldung: 18.12.2024
(73) Patentinhaber: SMW-AUTOBLOK Spannsysteme GmbH, 88074 Meckenbeuren (DE)
(72) Erfinder: Wolf, Emanuel, 88677 Markdorf (DE); Maurer, Eckhard, 88094 Oberteuringen (DE)
(74) Vertreter: Christ, Niko

(56) Entgegenhaltungen:
- EP-A1- 3 246 119
- DE-A1- 102009 021 874
- DE-A1- 19 631 675
- DE-B3- 102005 053 555
- DE-B4- 112011 105 196
- US-A1- 2011 214 520
- US-A1- 2018 135 751

## Beschreibung

Die vorliegende Erfindung betrifft ein Antriebsmodul, umfassend ein Gehäuse und einen bezüglich des Gehäuses in Richtung einer Längsachse drehfest aber längsverschieblich gelagerten Kolben zur Druck- oder Zugbetätigung insbesondere eines Spannmittels, wobei der Kolben (21) von einer Axialeinheit (8) umgriffen ist, welche drehbar, aber in Richtung der Längsachse (6) unbeweglich, gelagert ist, wobei die Axialeinheit (8) in Drehrichtung (7) elektromotorisch betätigbar ist und zwischen dem Kolben (21) und der Axialeinheit (8) eine Kulisse (10) ausgebildet ist, in welcher zur Erzeugung eines Kolbenhubs wenigstens ein Führungsstift (23) entlang einer in Richtung der Längsachse (6) geneigten Steuerkurve geführt ist.

Ein solches Antriebsmodul ist bereits aus der DE 11 2011 105196 B4 vorbekannt. Darüber hinaus ist auf die US 2011/214520 A1 hinzuweisen.

Es ist bereits seit langem bekannt, an Werkzeugmaschinen verschiedenste Arten von Spannmitteln einzusetzen, die für ihre Betätigung eine Betätigungskraft benötigen. Diese Betätigungskraft wird regelmäßig mithilfe von Hydraulikzylindern aufgebracht, die in den Werkzeugmaschinen eingesetzt werden und deren Kolben mit den Spannmitteln verbunden werden können, um eine Beaufschlagung sowohl mit einer Zugkraft als auch mit einer Druckkraft zu ermöglichen.

So wird beispielsweise an einen Spindelstock einer Drehmaschine im Bereich des Arbeitsraums ein Kraftspanner, etwa eine Spannzange oder ein Spanndorn, angebracht. Dahinter, also von dem in dem Kraftspanner eingespannten Werkstück abgewandt, folgt der Hydraulikzylinder und überträgt die Kraft über seine Zugstange auf den Kraftspanner.

Allerdings wird für Hydraulikanwendungen regelmäßig die Zuführung von Hydrauliköl erfordert, so dass eine Schlauchleitung herangeführt werden muss. Daher muss stets mit mehreren Medien gearbeitet werden, so in der Regel wenigstens mit elektrischer Energie und hydraulischem Druck.

Vor diesem Hintergrund liegt der vorliegenden Erfindung die Aufgabe zu Grunde, ein Antriebsmodul zu schaffen, welches diese Nachteile des Standes der Technik überwindet und einen gleichwertigen Ersatz für die bekannten Hydraulikkolben darstellt.

Gelöst wird diese Aufgabe durch ein Antriebsmodul gemäß den Merkmalen des unabhängigen Anspruchs 1. Sinnvolle Ausgestaltungen eines solchen Antriebsmoduls können den sich anschließenden, abhängigen Ansprüchen entnommen werden.

Vorgesehen ist insoweit ein Antriebsmodul, umfassend ein Gehäuse und einen bezüglich des Gehäuses in Richtung einer Längsachse drehfest aber längsverschieblich gelagerten Kolben zur Druck- oder Zugbetätigung insbesondere eines Spannmittels. Dieses ist erfindungsgemäß dadurch gekennzeichnet, dass der Kolben von einer Axialeinheit umgriffen ist, welche drehbar, aber in Richtung der Längsachse unbeweglich, gelagert ist, wobei die Axialeinheit in Drehrichtung elektromotorisch betätigbar ist und zwischen dem Kolben und der Axialeinheit eine Kulisse ausgebildet ist, in welcher zur Erzeugung eines Kolbenhubs wenigstens ein Führungsstift entlang einer in Richtung der Längsachse geneigten Steuerkurve geführt ist.

Die Erfindung sieht also vor, dass ein Kolben zur Kraftübertragung vorhanden ist, welcher einen gleichartigen Druck auf das Spannmittel, oder soweit andere Anwendungen gewünscht sind, wo die Erfindung zwanglos ebenfalls eingesetzt werden kann, ausübt, wie bei einem Hydraulikkolben. Der Kolben ist hierfür so gelagert, dass er sich gegenüber dem Gehäuse beziehungsweise der Axialeinheit nicht verdrehen kann, sondern lediglich in Richtung der Längsachse, also in Richtung einer angeschlossenen Vorrichtung wie etwa eines Spannmittels, aber auch beliebiger anderer Anwendungen, ausgerückt oder in Gegenrichtung weggezogen werden kann. Dies erfolgt dadurch, dass beispielsweise an dem Kolben wenigstens ein Führungsstift vorgesehen ist, der in einer Kulisse, also einer Führungsnut, der Axialeinheit geführt ist.

Es kann im Sinne einer kinematischen Umkehr ebenso vorgesehen sein, dass der wenigstens eine Führungsstift an der Axialeinheit befestigt ist und in eine Kulisse beziehungsweise Führungsnut des Kolbens eingreift. Wenn im Folgenden jedoch von der zunächst angesprochenen Lösung die Rede ist, soll dies stets auch in umgekehrter Konfiguration gelten.

Die Axialeinheit kann wiederum lediglich um die Längsachse gedreht, aber nicht in deren Richtung oder Gegenrichtung verschoben werden. Im Zuge einer Drehung der Axialeinheit bewegt sich folglich der wenigstens eine Führungsstift entlang der Kulisse. Wäre die Kulisse eine Ringnut, so würde sich der Kolben, der mit dem Führungsstift fest verbunden ist, nicht bewegen. Aufgrund einer Formgebung der Kulisse mit einer Steuerkurve, welche eine Neigung gegenüber der Längsachse aufweist, wird der Führungsstift während der Drehung der Axialeinheit in Richtung der Steuerkurve gedrückt und dadurch der mit ihm verbundene Kolben verschoben. Dies funktioniert in beiden Richtungen. Der Kolbenhub entspricht dabei der dem Anstieg der Steuerkurve auf dem während der Drehung der Axialeinheit zurückgelegten Weg in der Kulisse.

Im Fall eines rein elektromotorischen Antriebs der Axialeinheit ist somit für eine Kraftübertragung lediglich eine Stromzufuhr zu dem Antriebsmodul erforderlich, weitere Medien sind nicht notwendig.

In konkreter Ausgestaltung kann die Axialeinheit eines solchen Antriebsmoduls zwei Kurvenscheiben aufweisen, welche gemeinsam die Kulisse ausbilden, wobei die Kurvenscheiben unter Zwischenlage wenigstens einer Stützhülse miteinander drehfest verbunden sind. Insbesondere können die Kurvenscheiben in radialer Richtung einfache runde Scheiben sein, welche in Längsrichtung entlang ihrer Ränder jeweils eine Wandung des Kulissengangs ausbilden, so dass der Führungsstift zwischen den einander gegenüberliegenden Wandungen geführt ist und im Zuge einer Drehung der Axialeinheit in Richtung der Längsachse gedrückt wird.

Weiter kann die Kulisse in eine Mehrzahl gleichartiger Kulissenabschnitte geteilt sein. In einem solchen Fall verteilen sich die auftretenden Kräfte gleichmäßiger über den Umfang von Kolben und Axialeinheit, so dass einer Verkantung vorgebeugt wird. Jeder Kulissenabschnitt verläuft dann gleich wie die benachbarten Kulissenabschnitte, jedoch um einen Winkel versetzt.

Als besonders vorteilhaft wird die Verwendung von drei Führungsstiften angesehen, so dass die Kulisse in drei gleichartige Kulissenabschnitte geteilt ist und sich jeder Punkt der Kulissenabschnitte nach 120° Drehung wiederholt. Entsprechend sind in diesem Fall auch die Führungsstifte um 120° zueinander versetzt.

Um die Axialeinheit als solche in eine Drehbewegung um die Längsachse zu versetzen, ist vorgesehen, dass die Axialeinheit mit einem diese umgebenden Zahnkranz zusammenwirkt, so dass eine auf den Zahnkranz wirkende Kraft auf die Axialeinheit übertragen wird. In einer ersten, einfachen Ausgestaltung könnte dies direkt erfolgen, wenn der Zahnkranz mit der Axialeinheit spielfrei verbunden wäre. Dann würde jedwede in den Zahnkranz eingeleitete Kraft unmittelbar auf die Axialeinheit übertragen werden. Dies hätte jedoch den Nachteil, dass etwa bei einer Verwendung des Antriebsmoduls bei einem Kraftspanner der Aufbau einer Spannkraft ohne weiteres Zustellen des Kraftspanners nicht möglich wäre.

Die Erfindung sieht daher vor, dass der Zahnkranz auf der Axialeinheit beweglich, jedoch um eine Mittelposition federnd, gelagert ist. Erreicht in dem oben genannten Fall der Kraftspanner eine Anschlagposition, etwa weil ein Werkstück gegriffen wird, so kann weiter Kraft auf den Zahnkranz gegeben werden, welche in eine Federung des Zahnkranzes gegenüber der Axialeinheit eingeleitet wird. Bei Kraftbeaufschlagung des Werkstücks wird daher aus der Federkraft heraus der Kraftspanner nachgespannt, ohne dass hierzu der Zahnkranz nochmals motorisch angefahren werden muss. Das System spannt sich bei Bedarf selbst, so dass das Werkstück stets sicher gehalten ist.

In konkreter Ausgestaltung der Lagerung des Zahnkranzes können an der Axialeinheit wenigstens zwei Stützhülsen vorgesehen und zwischen den Stützhülsen und dem Zahnkranz eine Radialführung gebildet sein, bei der eine Führungsfeder in einer Führungsnut geführt ist. Bei einer Bewegung des Zahnkranzes gegenüber der Axialeinheit ist damit der Zahnkranz unverlierbar geführt. Hierbei ist es sowohl möglich, dass die Nut in dem Zahnkranz als auch in der Axialeinheit gebildet ist. Da die Axialeinheit jedoch ohnehin zwei Kurvenscheiben umfasst und damit mehrschichtig aufgebaut ist, ist es bevorzugt, wenn die Stützhülsen die Führungsnut ausbilden und Teil der Axialeinheit sind.

Die Führungsnut kann weiter eine trogförmige Verbreiterung aufweisen, wobei in der trogförmigen Verbreiterung ein Mitnehmer zur Kraftübertragung aufgenommen ist. Soweit wiederum die Führungsnut der Axialeinheit zugeordnet ist, bedeutet dies, dass der Mitnehmer mit dem Zahnkranz fest verbunden, bedarfsweise einstückig mit diesem gebildet ist. Der Mitnehmer liegt in der Verbreiterung der Nut und kann mit weiterem Vorteil beiderseits gegenüber stirnseitigen Enden der trogförmigen Verbreiterung mithilfe von Druckfedern abgestützt sein. Diese Druckfedern nehmen nach dem Erreichen einer Anlageposition des mit dem Kolben beispielsweise verbundenen Kraftspanners die weitere Energie auf, um diesen gegenüber dem Werkstück nachzuspannen.

Für einen Antrieb des Zahnkranzes kann dem Antriebsmodul in dem Gehäuse ein Elektromotor zugeordnet sein, welcher, entweder direkt oder indirekt unter Zwischenlage eines Getriebes, mit dem Zahnkranz zusammenwirkt. Mit besonderem Vorteil kann dem Elektromotor direkt ein Planetengetriebe zugeordnet sein, wodurch die Übertragung hoher Drehmomente ermöglicht wird. Mithilfe eines Stirnradgetriebes kann dann die Übertragung des Drehmoments auf den Zahnkranz erfolgen.

Ferner kann es vorgesehen sein, dass dem Elektromotor ein mit Kraftsensoren datenverbundener Mikrocontroller zur Kraftsteuerung zugeordnet ist. Die Sensoren erfassen bei einer solchen Lösung die von dem Kraftspanner tatsächlich aufgebrachte Kraft und regeln die Ansteuerung des Elektromotors entsprechend.

Um eine ungewollte Bewegung des Zahnkranzes nach dem Abschalten des Elektromotors zu verhindern, kann schließlich dem Zahnkranz eine Haltebremse, vorzugsweise eine stromlos sperrende elektrische Haltebremse, zugeordnet sein. Diese kann insbesondere ebenfalls über das oben angesprochene Stirnradgetriebe mit dem Zahnkranz zusammenwirken.

Die vorstehend beschriebene Erfindung wird im Folgenden anhand eines Ausführungsbeispiels näher erläutert.

Es zeigen
- Figur 1: ein mechatronisches Antriebsmodul in perspektivischer Darstellung von schräg oben,
- Figur 2: das Antriebsmodul gemäß Figur 1 in perspektivischem Teilschnitt,
- Figur 3: ein Kolben des Antriebsmoduls gemäß Figur 2 mit einem Axialmodul und Zahnkranz in seitlichem Teilschnitt,
- Figur 4: den Kolben mit Kurvenscheiben des Axialmoduls gemäß Figur 3 mit Stützhülsen und Zahnkranz in einem perspektivischen Teilschnitt, sowie
- Figur 5: das vollständige Axialmodul mit Zahnkranz und Kolben in perspektivischer Darstellung von schräg oben.

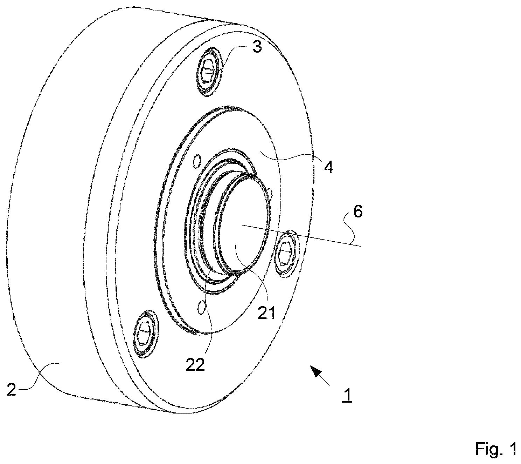

Figur 1 zeigt ein Antriebsmodul 1, welches als rein elektromechanischer Ersatz für einen Hydraulikkolben vorgesehen ist. Hierzu weist das Antriebsmodul 1 einen Kolben 21 auf, welcher zentriert in einem Gehäuse 2 des Antriebsmoduls 1 aufgenommen ist und rein elektromechanisch entlang einer Längsachse 6 aus dem Gehäuse 2 heraus und in das Gehäuse 2 hinein verschoben werden kann. Hierbei ist das Antriebsmodul 1 funktionell so aufgebaut, dass es sämtliche Anforderungen, die an einen Hydraulikkolben gestellt werden, ebenfalls erfüllt. So kann das Antriebsmodul über eine Anschraubung 3 mit der Maschinenspindel verbunden werden, um an dieser gehalten zu werden. Ein Zentrierrand 4 sorgt gegenüber einem anzuschließenden Spannmittel für eine Plananlage und das Spannmittel selbst kann über einen Kolbenanschluss 22 mit dem Kolben 21 verbunden werden, so dass es auf Druck und auf Zug beansprucht werden kann. Lediglich ist es erforderlich, zusätzlich die erforderliche elektrische Energie bereitzustellen, die jedoch über die Maschinenspindel herbeigeführt werden kann.

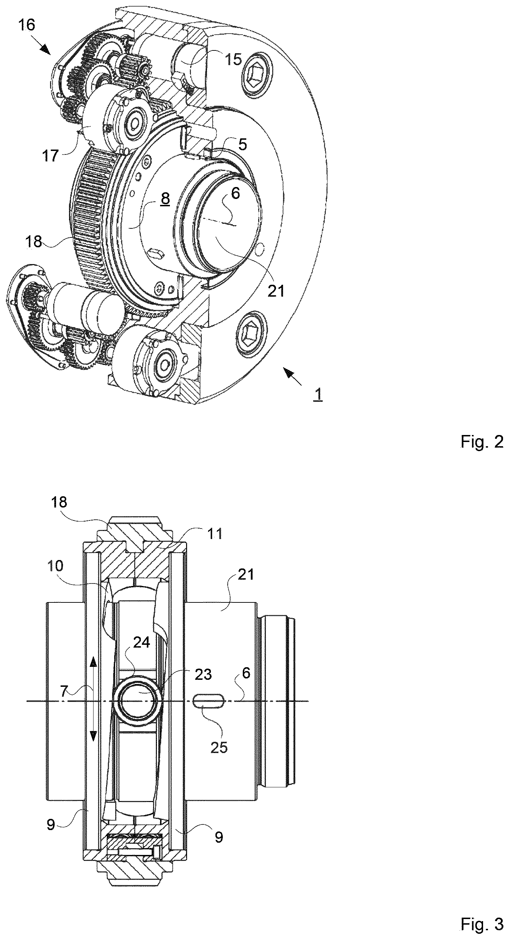

Figur 2 zeigt den Aufbau des Gehäuses, wobei die vorliegende Anordnung kreissymmetrisch aufgebaut ist. Die um den Kolben 21 und eine den Kolben 21 umgebende Axialeinheit 8 herum angeordneten Teile werden dreifach eingesetzt, was aber in gewissem Umfang skalierbar ist. Statt drei Elektromotoren 15 mit Getrieben 16 und Haltebremsen 17 könnten auch weniger oder mehr eingesetzt werden, zum Einen um die Kraft auf die Axialeinheit zu erhöhen, zum Anderen um eine gleichmäßige Einkopplung der Kraft sicherzustellen und zu vermeiden, dass Torsionskräfte auftreten.

Der Kolben 21 ist im Inneren des Gehäuses 2 so gelagert, dass er drehfest, aber längsverschieblich in dem Gehäuse aufgenommen ist. Die vorliegende Anordnung eignet sich konkret für einen Kolbenhub von bis zu 6 mm. Um diesen Hub zu erreichen, wirken die Elektromotoren 15 unter Zwischenlage von Getrieben 16 auf einen Zahnkranz 18 ein, welcher eine radialbewegliche, aber in Längsrichtung 6 fixierte Axialeinheit 8 umgreift. Mithilfe einer Haltebremse 17 kann vermieden werden, dass nach dem Ende einer Drehung des Elektromotors 15 der Zahnkranz 18 aufgrund von Rückstellkräften wieder in die Gegenrichtung dreht. Mithilfe der Dichtung 5 erfolgt eine staub- und schmutzdichte Lagerung des Kolbens 21.

Wird der Zahnkranz 18 mithilfe letztlich der Elektromotoren 15 gedreht, so wird diese Drehung auf die Axialeinheit 8 übertragen. Figur 3 zeigt hierbei, dass aufgrund einer Drehung der Axialeinheit 8 ein Kolbenhub erzeugt wird. Der im Wesentlichen zylindrische Kolben 21 weist an seiner Mantelfläche eine Mehrzahl von Führungsstiften 23 auf, auf die zur besseren Lagerung jeweils ein Gleitlager 24 aufgesteckt ist. Die Kurvenscheiben 9 der Axialeinheit 8 sind miteinander verbundene Ringscheiben, welche an ihrem inneren Rand aufeinander zugewandte Auskragungen aufweisen, die korrespondierende Steuerkurven ausbilden. Gemeinsam bilden die Kurvenscheiben 9 dadurch eine Kulisse 10, welche gegenüber der Längsachse 6 geneigt ist. Diese Kulisse wiederholt sich für jeden Führungsstift 23 des Kolbens 21, bei einer Anordnung von drei Führungsstiften 23 also dreimal im Versatz von 120°. Mithilfe einer Verdrehsicherung 25, welche dafür sorgt dass sich der Kolben gegenüber dem Gehäuse 2 nicht mitdrehen kann, wird bewirkt, dass sich der Führungsstift 23 aufgrund einer Drehung der Axialeinheit 8 in Drehrichtung 7 innerhalb der Kulisse 10 bewegen muss und dabei einen Bewegungsanteil in Längsrichtung 6 hat, was den Kolbenhub bewirkt. Die Verdrehsicherung ist als Nut umgesetzt, welche ein korrespondierendes Gegenstück an dem Gehäuse 2 besitzt, wobei Nut und Gegenstück über eine Passfeder derart verbunden sind, dass der Kolben drehfest aber längsverschieblich gelagert bleibt.

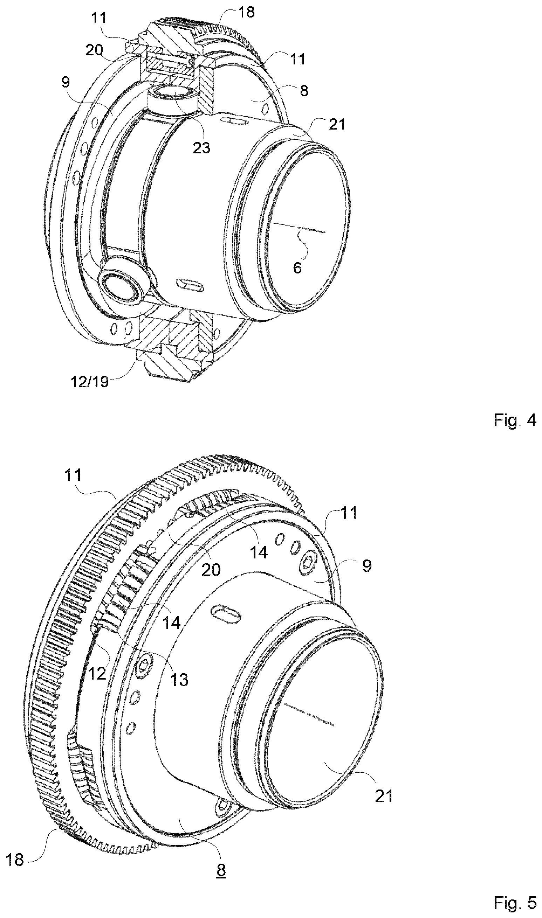

In Figur 4 ist weiter gezeigt, wie die Kurvenscheiben 9 der um den Kolben 21 herum angeordneten Axialeinheit 8 zusammengefügt sind. Dies erfolgt mithilfe zweier Stützhülsen 11, die mit den Kurvenscheiben 9 verschraubt sind. Die Stützhülsen 11 halten dabei eine Führungsnut 12 frei, in welcher eine korrespondierende Führungsfeder 19 des Zahnkranzes 18 radialverschieblich geführt ist. Der Zahnkranz 18 ist damit gegenüber der Axialeinheit 8 beweglich, weist aber Mitnehmer 20 auf, die dem Zahnkranz 18 vorliegend wiederum alle 120° an seiner Innenseite, die Führungsfeder 19 umgebend, vorgesehen sind.

Die Mitnehmer 20 mit dem daran befestigten Zahnkranz 18 sind in Figur 5 nochmals mit der vollständigen Axialeinheit 8 und dem Kolben 21 zusammen dargestellt. Die Mitnehmer 20 liegen dabei in Verbreiterungen 13 der Führungsnut 12, welche ebenfalls alle 120° vorgesehen sind. Beiderseits der Mitnehmer 20 sind Druckfedern 14 angeordnet, mit deren Hilfe sich die Mitnehmer 20 gegenüber stirnseitigen Enden der trogförmigen Verbreiterungen 13 abstützen, um bei einem Weiterdrehen des Zahnkranzes 18 nach Erreichen einer Anlage eines mit dem Kolben 21 allfällig verbundenen Spannmittels und nach dem insoweit auftretenden Anschlagen des Kolbens 21 eine zusätzliche Spannung aufzubauen. Löst sich etwa infolge einer mechanischen Bearbeitung eines Werkstücks der Zugriff des Spannmittels, so erfolgt ein Nachspannen aus der in den Druckfedern 14 gespeicherten Kraft und ein zusätzliches Anfahren der Elektromotoren 15 ist zum Nachspannen nicht erforderlich, das Werkstück hingegen ist sicher gehalten.

Vorstehend beschrieben ist somit ein Antriebsmodul, welches die bekannten Nachteile des Standes der Technik überwindet und einen gleichwertigen Ersatz für die bekannten Hydraulikkolben darstellt.

### BEZUGSZEICHENLISTE

- 1: Antriebsmodul
- 2: Gehäuse
- 3: Anschraubung
- 4: Zentrierrand
- 5: Dichtung
- 6: Längsachse
- 7: Drehrichtung
- 8: Axialeinheit
- 9: Kurvenscheibe
- 10: Kulisse
- 11: Stützhülse
- 12: Führungsnut
- 13: Verbreiterung
- 14: Druckfeder
- 15: Elektromotor
- 16: Getriebe
- 17: Haltebremse
- 18: Zahnkranz
- 19: Führungsfeder
- 20: Mitnehmer
- 21: Kolben
- 22: Kolbenanschluss
- 23: Führungsstift
- 24: Gleitlager
- 25: Verdrehsicherung

## Patentansprüche

1. Antriebsmodul, umfassend ein Gehäuse (2) und einen bezüglich des Gehäuses (2) in Richtung einer Längsachse (6) drehfest aber längsverschieblich gelagerten Kolben (21) zur Druck- oder Zugbetätigung insbesondere eines Spannmittels, wobei der Kolben (21) von einer Axialeinheit (8) umgriffen ist, welche drehbar, aber in Richtung der Längsachse (6) unbeweglich, gelagert ist, wobei die Axialeinheit (8) in Drehrichtung (7) elektromotorisch betätigbar ist und zwischen dem Kolben (21) und der Axialeinheit (8) eine Kulisse (10) ausgebildet ist, in welcher zur Erzeugung eines Kolbenhubs wenigstens ein Führungsstift (23) entlang einer in Richtung der Längsachse (6) geneigten Steuerkurve geführt ist, **dadurch gekennzeichnet, dass** die Axialeinheit (8) mit einem diese umgebenden Zahnkranz (18) drehmomentübertragend zusammenwirkt, wobei der Zahnkranz (18) auf der Axialeinheit (8) beweglich, jedoch um eine Mittelposition federnd, gelagert ist.

2. Antriebsmodul gemäß Anspruch 1, **dadurch gekennzeichnet, dass** die Axialeinheit (8) zwei Kurvenscheiben (9) aufweist, welche gemeinsam die Kulisse (10) ausbilden, wobei die Kurvenscheiben (9) unter Zwischenlage wenigstens einer Stützhülse (11) miteinander drehfest verbunden sind.

3. Antriebsmodul gemäß einem der Ansprüche 1 oder 2, **dadurch gekennzeichnet, dass** die Kulisse (10) in eine Mehrzahl gleichartiger Kulissenabschnitte geteilt ist und in jedem Kulissenabschnitt jeweils ein Führungsstift (23) geführt ist.

4. Antriebsmodul gemäß Anspruch 3, **dadurch gekennzeichnet, dass** drei Kulissenabschnitte und drei Führungsstifte (23), jeweils im Abstand von 120°, vorgesehen sind.

5. Antriebsmodul gemäß einem der vorhergehenden Ansprüche, **dadurch gekennzeichnet, dass** wenigstens zwei Stützhülsen (11) vorgesehen sind und zwischen den Stützhülsen (11) und dem Zahnkranz (18) eine Radialführung gebildet ist, bei der eine Führungsfeder (19) in einer Führungsnut (12) geführt ist.

6. Antriebsmodul gemäß Anspruch 5, **dadurch gekennzeichnet, dass** die Führungsnut wenigstens eine trogförmige Verbreiterung (13) aufweist, wobei in der trogförmigen Verbreiterung (13) ein Mitnehmer (20) zur Kraftübertragung aufgenommen ist.

7. Antriebsmodul gemäß Anspruch 6, **dadurch gekennzeichnet, dass** der Mitnehmer (20) beiderseits gegenüber stirnseitigen Enden der trogförmigen Verbreiterung (13) mithilfe von Druckfedern (14) abgestützt ist.

8. Antriebsmodul gemäß einem der vorhergehenden Ansprüche, **dadurch gekennzeichnet, dass** dem Gehäuse (2) ein Elektromotor (15) zugeordnet ist, welcher, entweder direkt oder indirekt unter Zwischenlage eines Getriebes (16), mit dem Zahnkranz zusammenwirkt.

9. Antriebsmodul gemäß Anspruch 8, **dadurch gekennzeichnet, dass** dem Elektromotor (15) ein Planetengetriebe und/oder ein Stirnradgetriebe zugeordnet ist.

10. Antriebsmodul gemäß einem der Ansprüche 8 oder 9, **dadurch gekennzeichnet, dass** dem Elektromotor (15) ein mit Kraftsensoren datenverbundener Mikrocontroller zur Kraftsteuerung zugeordnet ist.

11. Antriebsmodul gemäß einem der vorhergehenden Ansprüche, **dadurch gekennzeichnet, dass** dem Zahnkranz (18) eine Haltebremse (17), vorzugsweise eine stromlos sperrende elektrische Haltebremse (17), zugeordnet ist.

## Claims

1. Drive module, comprising a housing (2) and a piston (21) which is mounted so as to be rotationally fixed relative to the housing (2) but displaceable in the direction of a longitudinal axis (6), for pressure or tension actuation, in particular of a clamping means, wherein the piston (21) is surrounded by an axial unit (8) which is mounted so as to be rotatable but immovable in the direction of the longitudinal axis (6), wherein the axial unit (8) can be actuated electromotively in a direction of rotation (7), and wherein a guide track (10) is formed between the piston (21) and the axial unit (8), in which, in order to generate a piston stroke, at least one guide pin (23) is guided along a control curve inclined in the direction of the longitudinal axis (6),
**characterized in that** the axial unit (8) interacts in a torque-transmitting manner with a gear ring (18) surrounding the axial unit (8), wherein the gear ring (18) is mounted movably on the axial unit (8), but resiliently about a central position.

2. Drive module according to claim 1, **characterized in that** the axial unit (8) comprises two cam discs (9), which jointly form the guide track (10), wherein the cam discs (9) are connected to one another in a rotationally fixed manner with at least one support sleeve (11) arranged therebetween.

3. Drive module according to either claim 1 or claim 2, **characterized in that** the guide track (10) is divided into a plurality of identical guide-track sections and a respective guide pin (23) is guided in each guide-track section.

4. Drive module according to claim 3, **characterized in that** three guide-track sections and three guide pins (23), respectively spaced apart by 120°, are provided.

5. Drive module according to any one of the preceding claims, **characterized in that** at least two support sleeves (11) are provided and a radial guide is formed between the support sleeves (11) and the gear ring (18), in which a guide spring (19) is guided in a guide groove (12).

6. Drive module according to claim 5, **characterized in that** the guide groove has at least one trough-shaped widening (13), wherein a driver (20) for force transmission is received in the trough-shaped widening (13).

7. Drive module according to claim 6, **characterized in that** the driver (20) is supported on both sides against end faces of the trough-shaped widening (13) by means of compression springs (14).

8. Drive module according to any one of the preceding claims, **characterized in that** an electric motor (15) is associated with the housing (2), the electric motor interacting with the gear ring either directly or indirectly with a transmission (16) arranged therebetween.

9. Drive module according to claim 8, **characterized in that** a planetary gear and/or a spur gear is associated with the electric motor (15).

10. Drive module according to either claim 8 or claim 9, **characterized in that** a microcontroller connected to force sensors for force control is associated with the electric motor (15).

11. Drive module according to any one of the preceding claims, **characterized in that** a holding brake (17), preferably an electrically operated holding brake (17) which locks when de-energized, is associated with the gear ring (18).

## Revendications

1. Module d'entraînement, comprenant un boîtier (2) et un piston (21) monté de manière à être fixe en rotation par rapport au boîtier (2), mais déplaçable longitudinalement dans la direction d'un axe longitudinal (6), destiné à l'actionnement en pression ou en traction, notamment d'un moyen de serrage, le piston (21) étant entouré par une unité axiale (8) montée de manière à pouvoir tourner, mais à être immobile dans la direction de l'axe longitudinal (6), l'unité axiale (8) pouvant être actionnée électriquement dans un sens de rotation (7), et une coulisse (10) étant formée entre le piston (21) et l'unité axiale (8), dans laquelle, afin de produire une course du piston, au moins un pion de guidage (23) est guidé le long d'une courbe de commande inclinée dans la direction de l'axe longitudinal (6),
**caractérisé en ce que** l'unité axiale (8) coopère, de manière à transmettre un couple, avec une couronne dentée (18) entourant ladite unité axiale (8), la couronne dentée (18) étant montée de manière mobile sur l'unité axiale (8), mais élastiquement autour d'une position centrale.

2. Module d'entraînement selon la revendication 1, **caractérisé en ce que** l'unité axiale (8) comprend deux disques à cames (9), lesquels forment conjointement la coulisse (10), les disques à cames (9) étant reliés l'un à l'autre de manière fixe en rotation avec interposition d'au moins une douille de support (11).

3. Module d'entraînement selon l'une des revendications 1 ou 2, **caractérisé en ce que** la coulisse (10) est divisée en une pluralité de sections de coulisse identiques et **en ce qu'**un pion de guidage (23) est respectivement guidé dans chaque section de coulisse.

4. Module d'entraînement selon la revendication 3, **caractérisé en ce que** trois sections de coulisse et trois pions de guidage (23), espacés respectivement de 120°, sont prévus.

5. Module d'entraînement selon l'une quelconque des revendications précédentes, **caractérisé en ce qu'**au moins deux douilles de support (11) sont prévues et **en ce qu'**un guidage radial est formé entre les douilles de support (11) et la couronne dentée (18), dans lequel un ressort de guidage (19) est guidé dans une rainure de guidage (12).

6. Module d'entraînement selon la revendication 5, **caractérisé en ce que** la rainure de guidage présente au moins un élargissement en forme d'auge (13), dans lequel est reçu un entraîneur (20) destiné à la transmission de force.

7. Module d'entraînement selon la revendication 6, **caractérisé en ce que** l'entraîneur (20) est soutenu des deux côtés, par rapport aux extrémités frontales de l'élargissement en forme d'auge (13), à l'aide de ressorts de compression (14).

8. Module d'entraînement selon l'une quelconque des revendications précédentes, **caractérisé en ce qu'**un moteur électrique (15) est associé au boîtier (2), ledit moteur électrique coopérant avec la couronne dentée soit directement, soit indirectement avec interposition d'un engrenage (16).

9. Module d'entraînement selon la revendication 8, **caractérisé en ce qu'**un train planétaire et/ou un engrenage cylindrique est associé au moteur électrique (15).

10. Module d'entraînement selon l'une des revendications 8 ou 9, **caractérisé en ce qu'**un microcontrôleur relié par transmission de données à des capteurs de force, destiné à une commande de force, est associé au moteur électrique (15).

11. Module d'entraînement selon l'une quelconque des revendications précédentes, **caractérisé en ce qu'**un frein de maintien (17), de préférence un frein de maintien électrique (17) se bloquant en l'absence de courant, est associé à la couronne dentée (18).
